# EUROPÄISCHE PATENTSCHRIFT

(11) **EP 0 689 972 B1**
(45) Veröffentlichungstag und Bekanntmachung des Hinweises auf die Patenterteilung: **09.09.1998**
(21) Anmeldenummer: 95108904.4
(22) Anmeldetag: 09.06.1995
(51) Int. Cl.: B60R 22/18

(54) **Sicherheitsgurtstraffer für Kraftfahrzeuge**
Seatbelt pretensionner for vehicles
Prétendeur de ceinture de sécurité pour véhicules

(30) Priorität: 23.06.1994 DE 4422022
(43) Veröffentlichungstag der Anmeldung: 03.01.1996
(73) Patentinhaber: TAKATA (EUROPE) VEHICLE SAFETY TECHNOLOGY GmbH, D-89081 Ulm (DE)
(72) Erfinder: Kopetzky, Robert, D-89173 Lonsee (DE); Häge, Günther, D-89129 Langenau (DE)
(74) Vertreter: Manitz, Finsterwald & Partner

(56) Entgegenhaltungen:
- EP-A- 0 186 880
- EP-A- 0 306 299
- EP-A- 0 415 418
- EP-A- 0 502 370
- EP-A- 0 535 389
- EP-A- 0 567 303
- EP-A- 0 577 073
- EP-A- 0 685 371
- DE-U- 8 437 589
- DE-U- 9 408 983

## Beschreibung

Die Erfindung betrifft einen am Fahrzeugchassis befestigbaren Sicherheitsgurtstraffer für Kraftfahrzeuge nach dem Oberbegriff des Patentanspruchs 1.

Es ist bereits bekannt, das vorzugsweise als Drahtseil ausgebildete flexible Zugelement über unmittelbar am Fahrzeugchassis befestigte Umlenkglieder in eine im wesentlichen nach oben weisende Richtung umzulenken, wo das mit den Sicherheitsgurten verbundene Gegenstück am Gurtschloßteil angreift (FR 21 80 151, DE-OS 25 43 068). Die gesonderte Befestigung von Umlenkglied und Antriebsvorrichtung erfordert jedoch einen hohen Aufwand.

Weiter ist bereits eine Strammvorrichtung für einen Rücksitzgurt in Kraftfahrzeugen bekannt (EP 0 186 880 B1), bei der die Antriebsvorrichtung mit einem Umlenkblock baulich vereinigt ist, der das flexible Zugelement aus der Horizontalen in eine im wesentlichen vertikale Richtung umlenkt. Der Umlenkblock mit der Antriebsvorrichtung seinerseits ist am Fahrzeugchassis mit besonderen Befestigungsmitteln befestigt. Bei dieser Anordnung muß der Umlenkblock die bei einer Auslösung des Gurtstraffers entstehenden hohen Umlenkkräfte zunächst aufnehmen und dann über die ihn am Fahrzeugchassis festlegenden Befestigungsmittel an das Fahrzeugchassis weiterleiten. Die Umlenkung des flexiblen Zugelementes innerhalb des Umlenkblockes erfordert also eine entsprechend stabile Ausbildung desselben.

Bei einem in der EP-A-567 303 beschriebenen gattungsgemäßen Sicherheitsgurtstraffer für Kraftfahrzeuge ist die Antriebsvorrichtung mittels eines Bolzens befestigt, der zweckmäßigerweise auch eine Kabelumlenkrolle trägt. Für die Befestigung und die Kabelumlenkung sind also zwei verschiedene Bauelemente vorgesehen.

Das Ziel der Erfindung besteht darin, einen Sicherheitsgurtstraffer der eingangs genannten Gattung zu schaffen, der sowohl herstellungs- als auch montagemäßig wesentlich vereinfacht und besonders kompakt ausgebildet ist.

Zur Lösung dieser Aufgabe sind die Merkmale des kennzeichnenden Teils des Patentanspruchs 1 vorgesehen.

Durch die unmittelbare Anbringung bzw. Abstützung des Umlenkgliedes am Fahrzeugchassis werden entsprechend massiv auszubildende Zwischenglieder, die ihrerseits am Fahrzeugchassis festgelegt werden müssen, vermieden. Außerdem erhält das Umlenkglied eine Doppelfunktion, indem es außer seiner Aufgabe, das flexible Zugelement umzulenken, auch noch für die Befestigung der Antriebsvorrichtung bzw. an ihm vorgesehener Fortsätze und/oder Abwinklungen dient. Das Umlenkglied entlastet somit nicht nur die mit der Antriebsvorrichtung vorzugsweise einstückig verbundenen Bauelemente wie Fortsätze und/oder Abwinklungen von Umlenkkräften, sondern dient gleichzeitig noch zu deren fester Verbindung mit dem Fahrzeugchassis.

Obwohl grundsätzlich das Umlenkglied die einzige Befestigung für die Antriebsvorrichtung am Fahrzeugchassis darstellen kann, ist es möglich, insbesondere an dem vom Umlenkglied entfernten Ende der Antriebsvorrichtung noch eine oder mehrere zusätzliche Befestigungsstellen für die Anbringung am Fahrzeugchassis vorzusehen.

Vorteilhafte Weiterbildungen der Erfindung sind durch die Ansprüche 2 bis 4 gekennzeichnet.

Ein weiteres Problem bei derartigen Gurtstraffern besteht darin, das Gurtschloßteil so mit der Antriebsvorrichtung zu verbinden, daß es sich nach der Montage am Fahrzeugchassis in einer solchen Position am Fahrzeugsitz befindet, daß der Fahrzeuginsasse das mit dem Gurt verbundene Gegenstück problemlos in das Gurtschloßteil einstecken kann. Um dies zu erreichen, kann z.B. das flexible Zugelement so steif ausgebildet sein, daß es in der Lage ist, das Gurtschloßteil in einer aufrechten Position zu halten. In diesem Fall kann allerdings das flexible Zugelement nicht allein unter Berücksichtigung der erforderlichen Zugkraft ausgebildet werden, sondern muß zur Erzielung der erforderlichen Steifigkeit überdimensioniert werden.

Demgemäß soll durch eine vorteilhafte Weiterbildung der Erfindung erreicht werden, daß das Zugelement eine geringe Eigensteifigkeit aufweisen kann, ohne daß das Gurtschloßteil nicht mehr sicher in einer aufrechten Position gehalten wird.

Eine derartige vorteilhafte Weiterbildung der Erfindung entnimmt man dem Patentanspruch 5.

Der Grundgedanke dieser Ausführungsform ist nicht nur darin zu sehen, daß das Gurtschloßteil über die Federmanschette stabil an der Abwinklung gehalten wird, sondern weiter auch darin, daß das allein die erheblichen Umlenkkräfte auf das Fahrzeugchassis übertragende Umlenkglied sich in dem Bereich befindet, wo der Fortsatz der Antriebsvorrichtung in die im wesentlichen nach oben gerichtete Abwinklung übergeht. Auf diese Weise sind die Achse der Federmanschette bzw. der Abwinklung und des darin verlaufenden Zuggliedes in vorteilhafter Weise zumindest im wesentlichen miteinander ausgerichtet.

Mit besonderem Vorteil wird die Erfindung bei einem Gurtstraffer angewendet, bei welchem das flexible Zugelement nach Art eines einblockigen Flaschenzuges über das Gurtschloßteil geführt ist. Ein derartiger Gurtstraffer ist aus der DE-OS 42 30 665 an sich bekannt.

Ein wesentliches Problem bei derartigen flaschenzugartig arbeitenden Gurtstraffern ist die Verankerung des der Antriebsvorrichtung entgegengesetzten freien Endes des flexiblen Zugelements. Dieses muß im Fortsatz bzw. der Abwinklung der Antriebsvorrichtung so verankert sein, daß es sich weder losreißen noch Teile des Fortsatzes bzw. der Abwinklung ausbrechen kann.

Durch eine vorteilhafte Weiterbildung der Erfindung soll nun erreicht werden, daß von der Antriebsvorrichtung zum Gurtschloßteil eine Kraftübersetzung im Sinne einer Vergrößerung der Rückzugskraft und eine entsprechende Verkleinerung des Rückzugweges erfolgt, ohne daß die sichere Verankerung des freien Endes des flexiblen Zugelements beeinträchtigt wird.

Eine derartige Weiterbildung ist durch die Patentansprüche 6 und 7 definiert.

Weiter vorteilhafte Ausgestaltungen der Erfindung sind durch die Patentansprüche 8 bis 10 gekennzeichnet.

Die Erfindung wird im folgenden beispielsweise anhand der Zeichnung beschrieben; in dieser zeigt:
- Fig. 1: eine schematische teilweise geschnittene Seitenansicht eines erfindungsgemäßen Gurtstraffers, welcher an einem Fahrzeugchassis angebracht ist, und
- Fig. 2: eine schematische Schnittansicht nach Linie II-II in Fig. 1. (Figur 5 der ursprünglichen Beschreibung)

Nach der Zeichnung ist eine horizontal am Fahrzeugchassis 12 angeordnete Antriebsvorrichtung 11 als pyrotechnisch arbeitende Kolben(25)-Zylinder(26)-Einheit ausgebildet, deren hinterer Zylinderraum 27 am vom Kolben 25 abgewandten Ende eine zur Atmosphäre führende Öffnung 28 aufweist, während der vor dem Kolben 25 befindliche Zylinderraum 29 mit einer pyrotechnischen Druckerzeugungsvorrichtung 30 verbunden ist, die über eine Steckbuchse 31 an einen nicht dargestellen Beschleunigungssensor anschließbar ist. Im Falle einer unfallbedingten Beschleunigung bewirkt der bei 31 angeschlossene Sensor eine Zündung der in der pyrotechnischen Druckerzeugungsvorrichtung 30 befindlichen Ladung 32, wodurch im Zylinderraum 29 schlagartig ein hoher Druck aufgebaut wird, der den Kolben 25 in Richtung des Pfeiles F nach hinten verschiebt.

Mit dem Zentrum des Kolbens 25 fest verbunden ist ein als Drahtseil ausgebildetes flexibles Zugelement 13, welches durch eine dichte Bohrung 33 am vorderen Ende des Zylinders 26 hindurchtritt und dann durch einen geraden Kanal 34 hindurchgeführt ist, in dessen Bereich rundum das Drahtseil 13 eine nur schematisch angedeutete Rückzugssperre 35 angeordnet ist.

Bei 36 tritt das Drahtseil 13 aus der Antriebsvorrichtung 11 aus und erstreckt sich geradlinig zum Umfang eines Umlenkgliedes 14, welches unten einen mit Außengewinde versehenen Bolzenabschnitt 14', darüber einen Umlenkabschnitt 14'' größeren Durchmessers und ganz oben einen einen noch größeren Durchmesser aufweisenden Kopf-Führungsabschnitt 14'''' aufweist.

Vom vorderen Ende der Antriebsvorrichtung 11 erstreckt sich einstückig ein plattenartiger Fortsatz 20 bis über das Umlenkglied 14 hinaus. Er ist bei 37 nach oben abgerundet und geht dort in eine schräg nach oben weisende Abwinklung 21, die ebenfalls plattenartig ausgebildet sein kann, über.

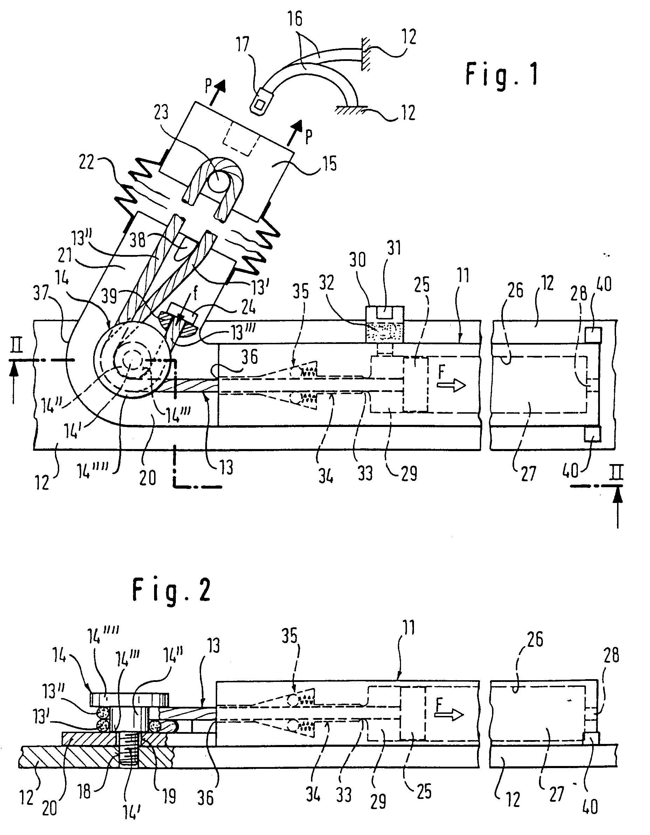

Wie insbesondere aus Fig. 2 hervorgeht, weist der Fortsatz 20 im Bereich einer im Fahrzeugchassis 12 vorgesehenen Gewindebohrung 18 eine durchgehende Bohrung 19 etwas größeren Durchmessers auf, durch die hindurch der Bolzenabschnitt 14' des Umlenkgliedes 14 in die Gewindebohrung 18 eingeschraubt ist. Dabei legt sich die zwischen dem Bolzenabschnitt 14' und dem Umlenkabschnitt 14'' befindliche horizontale Ringstufe 14''' auf die Oberfläche des Fortsatzes 20 rings um die durchgehende Bohrung 19 auf und drückt somit den Fortsatz 20 gegen das Fahrzeugchassis 12, so daß der Fortsatz 20 einschließlich der mit ihm einstückigen Antriebsvorrichtung 11 und der Abwinklung 21 sicher am Fahrzeugchassis 12 befestigt sind. Statt des Bolzenabschnitts 14' könnte auch ein mit Innengewinde versehener, nach unten offener Hülsenabschnitt vorgesehen sein, der auf einen am Fahrzeugchassis 12 befestigten, z.B. angeschweißten Gewindebolzen aufgeschraubt ist, wodurch ebenfalls der Fortsatz 20 an das Chassis 12 gepreßt werden kann.

Das Drahtseil 13 weist einen Hinführteil 13'' auf, der nach Fig. 2 um den oberen Bereich des Umlenkabschnittes 14'' herumgeführt ist, bis er die aus Fig. 1 ersichtliche Richtung zum Gurtschloßteil 15 hin erreicht hat. Der Hinführteil 13'' erstreckt sich dann innerhalb der entsprechend hohl ausgebildeten Abwinklung 21 bis zum Gurtschloßteil 15, an dem sich eine Umlenkrolle 23 befindet, um die das Drahtseil 13 um ca. 180° herumgeführt ist. Das dadurch gebildete Rückführteil 13' des Drahtseiles 13 wird dann um ein fest an der Abwinklung 21 angeordnetes Umlenkteil 38 so herumgelenkt, daß es zum vorderen Bereich des Umlenkabschnitts 14'' gelangt, wo es unterhalb des Hinführteils 13'' in ähnlicher Weise wie dieses um den Umlenkabschnitt 14'' herumgelegt ist. Während das Hinführteil 13'' den Umlenkabschnitt 14'' über einen Winkel von etwas mehr als 90° umschlingt, beträgt der Umschlingungswinkel des Rückführteils 13' etwas mehr als 180°. Das freie Ende 13''' des Rückführteils 13' ist mit einem Befestigungskopf 24 versehen, mittels dessen es an einem Anschlagkragen 39 des Fortsatzes 20 bzw. der Abwinklung 21 gegen eine Bewegung in Richtung des Pfeiles f gesichert ist.

Oberhalb des Gurtschloßteils 15, dessen technische Einzelheiten im einzelnen nicht dargestellt sind, ist in verkleinerter Wiedergabe das mit ihm zusammenarbeitende Schloß-Gegenstück 17 angedeutet, von dem sich die beiden Teile 16 eines Dreipunktgurtes 16 zu oberen bzw. unteren Bereichen des Fahrzeugchassis 12 erstrecken, wo sie in bekannter Weise befestigt sind.

Die Funktion des beschriebenen Gurtstraffers ist wie folgt:

Der Gurtstraffer wird im Herstellerbetrieb so zusammengebaut, daß die Antriebsvorrichtung 11, der Fortsatz 20, die Abwinklung 21, die Federmanschette 22 und das Gurtschloßteil 15 eine Baueinheit bilden, in der das Zugseil 13 in der aus der Zeichnung ersichtlichen Form angeordnet und fixiert ist. Vorzugsweise ist auch das Umlenkglied 14 bereits in die durchgehende Bohrung 19 eingesteckt und beispielsweise durch einen in Fig. 2 von unten aufgesteckten Federring gegen Herausfallen aus der Bohrung 19 gesichert. In dieser Form wird der Gurtstraffer beim Automobilhersteller angeliefert.

Dieser muß im Fahrzeugchassis 12 an der vorgesehenen Stelle lediglich die Gewindebohrung 18 vorsehen und - gegebenenfalls nach Entfernen des vorerwähnten Federringes - das Umlenkglied 14 mittels des Bolzenabschnittes 14' in die Gewindebohrung 18 einschrauben, bis die Ringstufe 14''' den Fortsatz 20 fest an das Fahrzeugchassis 12 angedrückt hat.

Nunmehr ist der Gurtstraffer so am Fahrzeugchassis 12 festgelegt, daß die bei einer Auslösung der pyrotechnischen Druckerzeugungsvorrichtung 30 auftretenden Umlenkkräfte am Umlenkglied 14 nicht erst auf den es umgebenden Fortsatz 20, sondern unmittelbar über den Bolzenabschnitt 14' in das Fahrzeugchassis 12 eingeleitet werden. Um ein Verdrehen der Anordnung um die Achse des Umlenkgliedes 14 zu vermeiden, können unmittelbar neben dem hinteren Ende der Antriebsvorrichtung 11 am Fahrzeugchassis 12 Vorsprünge 40 vorgesehen sein, zwischen die bei der Montage das hintere Ende der Antriebsvorrichtung 11 in der aus Fig. 1 und 2 ersichtlichen Weise eingeführt wird, bevor das Umlenkglied 14 festgeschraubt wird.

Nach der Montage wird an die Buchse 31 der nicht dargestellte Beschleunigungssensor angeschlossen. Tritt jetzt eine unfallbedingte Beschleunigung auf, so zündet der Sensor die pyrotechnische Ladung 32, und es wird im Zylinderraum 29 schlagartig ein hoher Druck erzeugt, der den Kolben 25 in Richtung des Pfeiles F beschleunigt. Dadurch wird das Drahtseil 13 nach rechts verschoben, wobei die Umlenkrolle 23 des Gurtschloßteils 15 nach unten gezogen wird. Hierbei wird die in Fig. 1 stark verkürzt dargestellte Federmanschette 22 axial zusammengedrückt. Die Folge ist eine Straffung der Gurte 16, sofern der Gurt durch Einführen des Gegenstückes 17 in das Gurtschloßteil 15 zuvor geschlossen worden war.

Sobald der Kolben 25 das hintere Ende des Zylinders 26 erreicht hat und sich das Gurtschloßteil 15 in der am weitesten nach unten verschobenen Position befindet, wird die von den Gurten 16 gesicherte Person nach vorn in den Gurt fallen und eine erhebliche Zugkraft in Richtung der Pfeile P in Fig. 1 auf das Gurtschloßteil 15 ausüben. Dieses versucht daraufhin über die Umlenkrolle 23 das Hinführteil 13'' des Drahtseils 13 wieder auszuziehen, wobei dann jedoch die Rückzugssperre 35 wirksam wird und ein Wieder-Ausziehen des Drahtseils 13 wirksam verhindert. Auch die hierbei auftretenden erheblichen Umlenkkräfte werden vom direkt in das Chassis 12 eingeschraubten Umlenkglied 14 unmittelbar auf das Fahrzeugchassis 12 übertragen. Das Umlenkglied 14 gibt auch die vom Rückführteil 13' ausgeübten, im wesentlichen gleich großen Umlenkkräfte unmittelbar an das Fahrzeugchassis 12 weiter.

Das hierbei wegen des radialen Abstandes des um den Umlenkabschnitt 14'' herumgeführten Drahtseilteiles von dem Mittelpunkt des Umlenkgliedes 14 auftretende geringfügige Drehmoment wird ohne weiteres durch die hierfür besonders zweckmäßigen Vorsprünge 40 am Ende der Antriebsvorrichtung 11 aufgefangen. Die wesentlichen Kräfte werden also jeweils vom Drahtseil 13 über das Umlenkglied 14 unmittelbar auf das Chassis 12 übertragen.

## Patentansprüche

1. Am Fahrzeugchassis (12) befestigbarer Sicherheitsgurtstraffer für Kraftfahrzeuge mit einer länglichen, im Kraftfahrzeug im wesentlichen horizontal anzuordnenden Antriebsvorrichtung (11), einem von der Antriebsvorrichtung (11) in seiner Längsrichtung verschiebbaren flexiblen Zugelement (13), welches von der Antriebsvorrichtung (11) über ein am Fahrzeugchassis (12) befestigtes Umlenkglied (14) nach oben zu einem mit einem am Ende eines Dreipunkt- oder Beckengurtes (16) angeordneten Gegenstück (17) zusammenarbeitenden Gurtschloßteil (15) geführt und dort eine Zugkraft übertragend angebracht ist,
dadurch gekennzeichnet,
daß das Umlenkglied (14) gleichzeitig als die Antriebsvorrichtung (11) am Fahrzeugchassis (12) festlegendes Befestigungselement ausgebildet ist, welches unmittelbar mit dem Fahrzeugchassis (12) fest verbindbar ist, daß das Umlenkglied einen am Fahrzeugchassis (12) anbringbaren Bolzen- oder Hülsenabschnitt (14') und einen Umlenkabschnitt (14'') aufweist und daß der Umlenkabschnitt (14'') eine dimensionsmäßig dem Zugelement (13) angepaßte Rundinsbesondere Kreiszylinder-Umfangsfläche aufweist, die radial über den Bolzen- bzw. Hülsenabschnitt (14') nach außen vorspringt, derart, daß eine Ringstufe (14''') zum Andrücken eines eine durchgehende Bohrung (19) aufweisenden Fortsatzes (20) der Antriebsvorrichtung (11) gebildet ist.

2. Sicherheitsgurtstraffer nach Anspruch 1, dadurch gekennzeichnet, daß der Bolzenabschnitt (14') mit einem Außengewinde bzw. der Hülsenabschnitt mit einem Innengewinde versehen ist, das in eine Gewindebohrung (18) bzw. auf einem Gewindezapfen des Fahrzeugchassis (12) ein- bzw. aufschraubbar ist.

3. Sicherheitsgurtstraffer nach Anspruch 1 oder 2, dadurch gekennzeichnet, daß auf der vom Bolzen- bzw. Hülsenabschnitt (14') abgewandten Seite des Umlenkabschnittes (14'') am Umlenkglied (14) ein sich radial über den Umlenkabschnitt (14'') hinauserstreckender Kopf-Führungsabschnitt (14'''') vorgesehen ist.

4. Sicherheitsgurtstraffer nach einem der vorhergehenden Ansprüche, dadurch gekennzeichnet, daß unmittelbar an der Seite der Antriebsvorrichtung (11), wo das Zugelement (13) austritt, der Fortsatz (20) und das am Fahrzeugchassis (12) befestigte Umlenkglied (14) vorgesehen sind.

5. Sicherheitsgurtstraffer nach einem der Ansprüche 1 bis 4,
dadurch gekennzeichnet,
daß sich von der Antriebsvorrichtung (11), wo das Zugelement (13) austritt, ein Fortsatz (20) bis in den Bereich des unmittelbar am Fahrzeugchassis (12) befestigbaren Umlenkgliedes (14) erstreckt, und daß der Fortsatz (20) eine nach oben gerichtete Abwinklung (21) aufweist, an der über eine Federmanschette (22) der Gurtschloßteil (15) elastisch und relativ zur Abwinklung (21) federnd zurückziehbar angeordnet ist.

6. Sicherheitsgurtstraffer nach einem der vorhergehenden Ansprüche, dadurch gekennzeichnet,
daß ein Rückführteil (13') des Zuggliedes (13) über ein am Gurtschloßteil (15) befestigtes Umlenkelement (23) zur Antriebsvorrichtung (11) bzw. einem daran befestigten Fortsatz (20) oder einer vom Fortsatz (20) ausgehenden Abwinklung (21) zurückgeführt und mit seinem freien Ende (13'') dort befestigt ist.

7. Gurtstraffer nach Anspruch 6, dadurch gekennzeichnet,
daß das Rückführteil (13') des Zugelementes (13) bis zum Umlenkglied (14) geführt, vorzugsweise auf der gleichen Seite wie das Hinführteil (13'') des Zugelementes (13) zumindest teilweise und vorzugsweise um etwa 180° um den entsprechend hoch ausgebildeten Umlenkabschnitt (14'') herumgelegt und erst danach mit seinem freien Ende (13'') am Fortsatz (20) oder der Abwinklung (21) festgelegt ist.

8. Gurtstraffer nach einem der vorhergehenden Ansprüche, dadurch gekennzeichnet, daß insbesondere im vom Umlenkglied (14) abgewandten Endbereich der Antriebsvorrichtung (11) weitere Befestigungsmittel (40) zwischen Antriebsvorrichtung (11) und Fahrzeugchassis (12) vorgesehen sind, die eine Verdrehung der Antriebsvorrichtung (11) und der mit ihr verbundenen Teile um die Achse des Umlenkgliedes (14) verhindern.

9. Gurtstraffer nach einem der vorhergehenden Ansprüche, dadurch gekennzeichnet, daß das flexible Zugelement (13) ein Drahtseil ist.

10. Gurtstraffer nach einem der vorhergehenden Ansprüche, dadurch gekennzeichnet, daß die Antriebsvorrichtung (11) eine im Fahrzeug horizontal anzuordnende Kolben(25)-Zylinder(26)-Anordnung ist, wobei der Kolben (25) mit dem Kraftangriffsende des flexiblen Zugelements (13) fest verbunden ist und von dieser Befestigungsseite her durch den von einer pyrotechnischen Ladung (32) erzeugten Druck beaufschlagbar ist.

## Claims

1. Safety belt tensioner for motor vehicles which can be mounted on the vehicle chassis (12), the tensioner comprising an elongate drive device (11) which is to be arranged substantially horizontally in the motor vehicle, a flexible draw element (13) which is displaceable in its longitudinal direction by the drive device (11), which is guided upwardly from the drive device (11) via a deflection member (14) secured to the vehicle chassis (12) to a belt lock part (15), which cooperates with a counter-piece (17) arranged at the end of a three-point belt or of a lap belt (16), and which is mounted there so as to transmit a tensile force, characterised in that the deflection member (14) is simultaneously designed as a mounting element which secures the drive device (11) to the vehicle chassis (12), and is directly and firmly connectable to the vehicle chassis (12), in that the deflection member has a bolt or sleeve section (14') mountable to the vehicle chassis (12) and a deflection section (14''), and in that the deflection section (14'') has a round peripheral surface, in particular a right-cylindrical surface which is dimensionally matched to the draw element (13) and which projects radially outwardly beyond the bolt section or the sleeve section (14') in such a way that a ring step (14''') is formed for pressing against a projection (20) of the drive device (11) having a through-bore (19).

2. Safety belt tensioner in accordance with claim 1, characterised in that the bolt section (14') is provided with an external thread or the sleeve section is provided with an internal thread which can be screwed into a threaded bore (18) of the vehicle chassis (12) or onto a threaded spigot of the vehicle chassis (12).

3. Safety belt tensioner in accordance with claim 1 or claim 2, characterised in that a head and guiding section (14'''') which extends radially beyond the deflection section (14'') is provided on the deflection member (14) at the end of the deflection section (14'') remote from the bolt or sleeve section (14').

4. Safety belt tensioner in accordance with one of the preceding claims, characterised in that the projection (20) and the deflection member (14) secured to the vehicle chassis are provided directly at the side of the drive device (11) where the draw element (13) emerges.

5. Safety belt tensioner in accordance with one of the claims 1 to 4, characterised in that a projection (20) extends from the drive device (11) where the draw element (13) emerges up to and into the region of the deflection member (14) directly secured to the vehicle chassis (12); and in that the projection (20) has an upwardly directed angled portion (21) at which the belt lock part (15) is elastically and resiliently retractably arranged relative to the angled portion (21) via a spring cuff (22).

6. Safety belt tensioner in accordance with one of the preceding claims, characterised in that a return part (13') of the draw member (13) is led back via a deflection element (23) secured to the belt lock part (15) to the drive device (11) or to a projection (20) secured thereto or to an angled portion (21) starting from the projection (20) and is secured there at its free end (13'').

7. Belt tensioner in accordance with claim 6, characterised in that the return part (13') of the draw element (13) is guided up to the deflection member (14), preferably at the same side as the leading part (13'') of the draw element (13), which is made of corresponding height, and is at least partly wrapped around the deflection section (14''), and preferably wrapped through about 180° around the deflection section (14''), and is only then secured by its free end (13'') to the projection (20) or to the angled portion (21).

8. Belt tensioner in accordance with one of the preceding claims, characterised in that further securing means (40) are provided between the drive device (11) and the vehicle chassis (12), in particular in the end region of the drive device (11) remote from the deflection member (14), and prevent a rotation of the drive device (11) and of the parts connected to it about the axis of the deflection member (14).

9. Belt tensioner in accordance with one of the preceding claims, characterised in that the flexible draw element (13) is a wire cable.

10. Belt tensioner in accordance with one of the preceding claims, characterised in that the drive device (11) is a piston(25)-in-cylinder(26) arrangement which is to be horizontally disposed in the vehicle, with the piston (25) being fixedly connected to the force engagement end of the flexible draw member (13) and being loadable from this mounting side by the pressure generated by a pyrotechnical charge (32).

## Revendications

1. Tendeur de ceinture de sécurité pour véhicules, susceptible d'être fixé au châssis (12) du véhicule, comportant un dispositif d'entraînement (11) allongé, destiné à être agencé sensiblement à l'horizontale dans le véhicule, un élément de traction (13) flexible déplaçable dans sa direction longitudinale par le dispositif d'entraînement (11), ledit élément de traction étant guidé depuis le dispositif d'entraînement (11) vers le haut par l'intermédiaire d'un organe de renvoi (14) fixé sur le châssis (12) du véhicule, jusqu'à une partie de verrou (15) de ceinture coopérant avec une pièce correspondante (17) agencée à l'extrémité d'une ceinture à trois points ou d'une ceinture abdominale (16), et étant monté sur cette partie de verrou en transmettant une force de traction, caractérisé en ce l'organe de renvoi (14) est réalisé simultanément en tant qu'élément de fixation fixant le dispositif d'entraînement (11) sur le châssis (12) du véhicule, ledit élément de fixation étant susceptible d'être relié de manière solidaire directement sur le châssis (12) du véhicule, en ce que l'organe de renvoi présente un tronçon de goujon ou de douille (14') susceptible d'être monté sur le châssis (12) du véhicule et un tronçon de renvoi (14''), et en ce que le tronçon de renvoi (14'') présente une surface périphérique ronde, en particulier cylindrique circulaire adaptée aux dimensions de l'élément de traction (13), laquelle fait saillie radialement vers l'extérieur au-delà du tronçon de goujon ou de douille (14'), respectivement, de telle sorte qu'il se forme un gradin annulaire (14''') pour enfoncer un prolongement (20) du dispositif d'entraînement (11) qui présente un perçage traversant (19).

2. Tendeur de ceinture de sécurité selon la revendication 1, caractérisé en ce que le tronçon de goujon (14') est pourvu d'un filetage et le tronçon de douille est pourvu d'un taraudage, respectivement, qui est susceptible d'être vissé dans un alésage taraudé (18) ou sur une goupille filetée, respectivement, du châssis (12) du véhicule.

3. Tendeur de ceinture de sécurité selon l'une ou l'autre des revendications 1 et 2, caractérisé en ce que sur la face du tronçon de renvoi (14'') qui est détournée du tronçon de goujon ou de douille (14'), un tronçon de guidage de tête (14'''') s'étendant radialement au-delà du tronçon de renvoi (14'') est prévu sur l'organe de renvoi (14).

4. Tendeur de ceinture de sécurité selon l'une quelconques des revendications précédentes, caractérisé en ce que directement sur la face du dispositif d'entraînement (11), là où sort l'élément de traction (13), sont prévus le prolongement (20) et l'organe de renvoi (14) fixé sur le châssis (12) du véhicule.

5. Tendeur de ceinture de sécurité selon l'une quelconque des revendications 1 à 4, caractérisé en ce que depuis le dispositif d'entraînement, là où sort l'élément de traction (13), un prolongement (20) s'étend jusque dans la région de l'organe de renvoi (14) susceptible d'être fixé directement sur le châssis (12) du véhicule, et en ce que le prolongement (20) présente un coude (21) dirigé vers le haut, sur lequel la partie de verrou de ceinture (15) est fixée élastiquement par l'intermédiaire d'une manchette élastique (22), et de manière à pouvoir être retirée de manière élastique par rapport au coude (21).

6. Tendeur de ceinture de sécurité selon l'une quelconques des revendications précédentes, caractérisé en ce qu'une pièce de guidage en retour (13') de l'élément de traction (13) est guidée en retour vers le dispositif d'entraînement (11) ou vers un prolongement (20) fixé à celui-ci, ou bien vers un coude (21) partant du prolongement (20) par l'intermédiaire d'un élément de renvoi (23) fixé sur la partie de verrou (15), et en ce qu'elle y est fixée avec son extrémité libre (13'').

7. Tendeur de ceinture de sécurité selon la revendication 6, caractérisé en ce que la pièce de guidage en retour (13') de l'élément de traction (13) est guidée jusqu'à l'organe de renvoi (14), de préférence du même côté que la pièce de guidage en avancement (13'') de l'élément de traction (13), en ce qu'elle est rabattue au moins partiellement et de préférence d'approximativement 180° autour du tronçon de renvoi (14'') réalisé de hauteur correspondante, et en ce qu'alors seulement, elle est fixée sur le prolongement (20) ou le coude (21) avec son extrémité libre (13'').

8. Tendeur de ceinture de sécurité selon la revendication 6, caractérisé en ce qu'en particulier dans la région finale du dispositif d'entraînement (11) qui est détournée de l'organe de renvoi (14), il est prévu entre le dispositif d'entraînement (11) et le châssis (12) du véhicule d'autres moyens de fixation (40) qui empêchent que le dispositif d'entraînement (11) et les pièces reliées à celui-ci ne tournent autour de l'axe de l'organe de renvoi (14).

9. Tendeur de ceinture de sécurité selon la revendication 6, caractérisé en ce que l'élément de traction flexible (13) est un câble en fil d'acier.

10. Tendeur de ceinture de sécurité selon la revendication 6, caractérisé en ce que le dispositif d'entraînement (11) est un système à piston (25) et cylindre (26) à agencer à l'horizontale dans le véhicule, le piston (25) étant solidairement relié à l'extrémité d'attaque de force de l'élément de traction (13) flexible et étant susceptible d'être sollicité depuis ce côté de fixation par la pression engendrée par une charge (32) pyrotechnique.
